(19) Europäisches Patentamt
European Patent Office
Office européen des brevets

(11) **EP 4 509 315 A1**

(12) **EUROPEAN PATENT APPLICATION**
published in accordance with Art. 153(4) EPC

(43) Date of publication:
**19.02.2025 Bulletin 2025/08**

(21) Application number: **23788211.3**

(22) Date of filing: **04.04.2023**

(51) International Patent Classification (IPC):
*B32B 27/36* (2006.01)    *B29C 67/20* (2006.01)
*B32B 5/18* (2006.01)    *B32B 27/00* (2006.01)
*B32B 27/32* (2006.01)    *C08J 9/00* (2006.01)
*C08K 3/013* (2018.01)    *C08K 5/54* (2006.01)
*G09F 3/02* (2006.01)

(52) Cooperative Patent Classification (CPC):
**B29C 67/20; B32B 5/18; B32B 27/00; B32B 27/32; B32B 27/36; C08J 9/00; C08K 3/013; C08K 5/54; G09F 3/02**

(86) International application number:
**PCT/JP2023/013922**

(87) International publication number:
**WO 2023/199792 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 JP 2022067870**

(71) Applicant: **Toyobo Co., Ltd.**
**Kita-ku**
**Osaka-shi, Osaka 530-0001 (JP)**

(72) Inventors:
• **NISHIO, Shotaro**
 **Tsuruga-shi, Fukui 914-8550 (JP)**
• **SHIMIZU, Akira**
 **Tsuruga-shi, Fukui 914-8550 (JP)**
• **NAKANISHI, Anna**
 **Tsuruga-shi, Fukui 914-8550 (JP)**

(74) Representative: **Vossius & Partner**
**Patentanwälte Rechtsanwälte mbB**
**Siebertstrasse 3**
**81675 München (DE)**

(54) **CAVITY-CONTAINING POLYESTER FILM, RESIN COMPOSITION, PRODUCTION METHOD FOR RESIN COMPOSITION**

(57) Provided is a cavity-containing polyester film that exhibits excellent lightness, film formability, concealing properties, and whiteness even in a case of mainly using a polyolefin resin (for example, polypropylene resin) as a cavity generating agent. The cavity-containing polyester film is a laminated body in which a first coating layer B1 that includes a polyester resin containing an inorganic pigment, a cavity-containing layer A that contains cavities inside, and a second coating layer B2 that includes a polyester resin containing an inorganic pigment are laminated in this order. This cavity-containing layer A includes a composition containing a polyester resin, a polyolefin resin, and a silicone resin. The apparent density of this cavity-containing polyester film is 0.80 g/cm$^3$ or more and 1.20 g/cm$^3$ or less. The inorganic pigment in the first coating layer B1 and second coating layer B2 is, for example, titanium oxide.

EP 4 509 315 A1

**Description**

TECHNICAL FIELD

The present invention relates to a cavity-containing polyester film that contains cavities inside, a resin composition obtained by material recycling of the cavity-containing polyester film, and a production method for a resin composition.

BACKGROUND ART

As a method for obtaining films that have functions similar to those of paper, a method is known in which a large number of minute cavities are contained inside the films.

In this method, an immiscible thermoplastic resin (hereinafter referred to as an immiscible resin) is mixed into a polyester resin to obtain a sheet in which the immiscible resin is dispersed in the polyester resin, and the sheet is stretched at least in one direction. In this method, this causes interfacial peeling between the polyester resin and the immiscible resin, and cavities are thus generated. Examples of such an immiscible resin include polyolefin resins such as polyethylene resin, polypropylene resin, and polymethylpentene resin (see, for example, Patent Documents 1 to 3) and polystyrene resins (see, for example, Patent Documents 4 and 5). Among these, polypropylene resin is particularly preferable from the viewpoint of cavity generating properties and cost performance.

Here, in a case where polypropylene resin is simply dispersed in a polyester resin, the dispersed polypropylene particles have a large dispersed diameter. Therefore, cavities are easily generated, but on the other hand, the cavities become larger, thus sufficient concealing properties are not obtained, and film formability is also poor. For this reason, a method in which polypropylene resin is finely dispersed has been adopted. Hitherto, as this finely dispersing method, methods in which dispersants such as a surfactant and polyethylene glycol are added have been proposed (see, for example, Patent Documents 6 and 7).

PRIOR ART DOCUMENTS

PATENT DOCUMENTS

Patent Document 1: JP-A-49-134755
Patent Document 2: JP-A-2-284929
Patent Document 3: JP-A-2-180933
Patent Document 4: JP-B-54-29550
Patent Document 5: JP-A-11-116716
Patent Document 6: JP-B-7-17779
Patent Document 7: JP-A-8-252857

SUMMARY OF THE INVENTION

PROBLEMS TO BE SOLVED BY THE INVENTION

However, in a case where dispersants such as surfactants and polyethylene glycol are added, there is an effect of finely dispersing polypropylene resin, but the polypropylene resin is deformed during the heat stretching step and heat setting step. Therefore, the obtained cavities are also easily crushed, and sufficient lightness and cushioning properties are not obtained. Since surfactants and polyethylene glycol are inferior in heat resistance, thermal degradation is likely to occur in the melt extrusion step for polyester resin, and the whiteness of the obtained film decreases. In some cases, there is a problem that degradation of polyester resin is promoted and film formability deteriorates.

An object of the present invention is to improve the above-mentioned problems of the prior art and to provide a cavity-containing polyester film that exhibits excellent lightness, film formability, concealing properties, and whiteness even in a case of mainly using a polyolefin resin (for example, polypropylene resin) as a cavity generating agent. Another object of the present invention is to provide a resin composition obtained by material recycling of a cavity-containing polyester film, and a production method for a resin composition.

MEANS FOR SOLVING THE PROBLEMS

As a result of extensive studies, the present inventors have found out the following by adding a trace amount of silicone resin to a polyolefin resin (for example, polypropylene resin). In other words, the present inventors have found out that it is possible to improve the heat resistance or rigidity of dispersed polyolefin particles (for example, dispersed polypropylene particles) in a polyester resin and to reduce the deformation of dispersed polyolefin particles (for example, dispersed polypropylene particles) during heat stretching and heat setting by silicone resin. The present inventors have found out that this makes it possible to obtain a cavity-containing polyester film that is excellent in lightness, film formability, concealing properties, and whiteness. Furthermore, the present inventors have found out that it is possible to suppress the deterioration of coatability and printability, which is a side effect of silicone resin, by adjusting the lamination configuration and the amount of silicone resin added.

In other words, the cavity-containing polyester film of the present invention has the following configuration.

1. A cavity-containing polyester film including:

a first coating layer B1 that includes a polyester resin containing an inorganic pigment;
a cavity-containing layer A that contains cavities inside; and
a second coating layer B2 that includes a polyester resin containing an inorganic pigment,
in which the first coating layer B1, the cavity-containing layer A, and the second coating layer B2 are laminated in this order,
the cavity-containing layer A includes a composition containing a polyester resin, a polyolefin resin, and a silicone resin, and
the cavity-containing polyester film has an apparent density of 0.80 $g/cm^3$ or more and 1.20 $g/cm^3$ or less.

2. The cavity-containing polyester film according to 1., in which a content of polydimethylsiloxane in the silicone resin in the cavity-containing layer A is 1 ppm or more and 2500 ppm or less with respect to a total mass of the cavity-containing layer A.

3. The cavity-containing polyester film according to 1. or 2., in which a content of polydimethylsiloxane in the silicone resin in the cavity-containing layer A is 0.005% by mass or more and 2.000% by mass or less with respect to 100% by mass of the polyolefin resin.

4. The cavity-containing polyester film according to any one of 1. to 3., in which the inorganic pigment in the first coating layer B1 and second coating layer B2 is titanium oxide.

5. The cavity-containing polyester film according to any one of 1. to 4., in which a ratio of a sum of a thickness of the first coating layer B1 and a thickness of the second coating layer B2 to a sum of the thickness of the first coating layer B1, a thickness of the cavity-containing layer A, and the thickness of the second coating layer B2 is 6% or more and 40% or less.

6. The cavity-containing polyester film according to any one of 1. to 5., which has a total light transmittance of 1% or more and 30% or less.

7. The cavity-containing polyester film according to any one of 1. to 6., which has an apparent density of 0.80 $g/cm^3$ or more and 1.10 $g/cm^3$ or less.

8. The cavity-containing polyester film according to any one of 1. to 7., which is used for a label, a card, a packaging material, or a release film.

9. A resin composition containing an inorganic pigment, a polyester resin, a polyolefin resin, and a silicone resin, the resin composition being obtained by material recycling of the cavity-containing polyester film according to any one of 1. to 8.

10. A production method for a resin composition, including producing a resin composition containing an inorganic pigment, a polyester resin, a polyolefin resin, and a silicone resin by material recycling of the cavity-containing polyester film according to any one of 1. to 8.

11. The cavity-containing polyester film according to any one of 1. to 8., the resin composition according to 9. or the production method for a resin composition according to 10., in which the polyolefin resin is polypropylene resin.

EFFECT OF THE INVENTION

The present invention can provide a cavity-containing polyester film that exhibits excellent lightness, film formability, concealing properties, and whiteness even in a case of mainly using a polyolefin resin (for example, polypropylene resin) as a cavity generating agent.

MODE FOR CARRYING OUT THE INVENTION

Hereinafter, the present invention will be described in detail. In the present specification, the expression that "the first coating layer B1, the cavity-containing layer A, and the second coating layer B2 are laminated at least in this order" is sometimes used. This expression and expressions similar thereto are expressions that allow for the presence of some layer(s) between the first coating layer B1 and the cavity-containing layer A and/or between the cavity-containing layer A and the second coating layer B2.

The cavity-containing polyester film of the present invention includes the cavity-containing layer A containing a polyolefin resin. Examples of the polyolefin resin include polypropylene resin, polyethylene resin, and polymethylpentene resin. Examples of the polyolefin resin also include cyclic polyolefin resins. Examples of the cyclic polyolefin resins include polymers obtained by hydrogenating ring-opening copolymers of cyclic olefins if necessary, addition (co)polymers of cyclic olefins, random copolymers of cyclic olefins and $\alpha$-olefins, and graft modified products in which at least one of these is modified with an unsaturated carboxylic acid or a derivative thereof. Among these, polypropylene resin is preferable from the viewpoint of cavity generating properties and cost performance.

Hereinafter, an embodiment in which the polyolefin resin is polypropylene resin will be described. The description of polyolefin resins other than polypropylene resin will be omitted since the description overlaps with the description of polypropylene resin. Hence, the description (for example, description of melt flow rate, deflection temperature under load, weight average molecular weight, molecular weight distribution, content) of polypropylene resins below can also be regarded as the description of polyolefin resins other than polypropylene resin. For example, the description of the melt flow rate of polypropylene resin below can also be regarded as the description of the melt flow rate of polyolefin resins, and the description of the content of polypropylene resin below can also be regarded as the description of the content of polyolefin resins.

The cavity-containing polyester film of the present invention is a laminated body in which a first coating layer B1 that includes a polyester resin containing an inorganic pigment, a cavity-containing layer A that contains cavities inside, and a second coating layer B2 that includes a polyester resin containing an inorganic pigment are laminated in this order. This cavity-containing layer A includes a composition containing a polyester resin, a polyolefin resin, and a silicone resin. The apparent density of this cavity-containing polyester film is 0.80 g/cm$^3$ or more and 1.20 g/cm$^3$ or less.

The polyester resin that is the main component of the cavity-containing layer A, first coating layer B1, and second coating layer B2 is a polymer that is synthesized from a dicarboxylic acid or an ester-forming derivative thereof and a diol or an ester-forming derivative thereof. Representative examples of such a polyester resin include polyethylene terephthalate, polybutylene terephthalate, and polyethylene-2,6-naphthalate. Among these, polyethylene terephthalate is preferable from the viewpoints of mechanical characteristics and heat resistance, cost, and the like.

These polyester resins may be copolymerized with other components as long as the objects of the present invention are not impaired. Specifically, as the copolymerization components, examples of a dicarboxylic acid component include isophthalic acid, naphthalenedicarboxylic acid, 4,4-biphenyldicarboxylic acid, adipic acid, sebacic acid, and any ester-forming derivative thereof. Examples of a diol component include diethylene glycol, hexamethylene glycol, neopentyl glycol, and cyclohexanedimethanol. Examples of a diol component also include polyoxyalkylene glycols such as polyethylene glycol and polypropylene glycol. The amount of copolymerization is preferably 10 mol% or less, more preferably 5 mol% or less per constituent repeating unit.

As the production method for a polyester resin, for example, first, the above-mentioned dicarboxylic acid or an ester-forming derivative thereof and the above-mentioned diol or an ester-forming derivative thereof are used as main starting materials. Next, according to a conventional method, an esterification or transesterification reaction is conducted, and then a polycondensation reaction is conducted at a high temperature and a reduced pressure to produce a polyester resin.

The intrinsic viscosity of the polyester resin is preferably 0.50 dl/g or more and 0.9 dl/g or less, more preferably 0.55 dl/g or more and 0.85 dl/g or less from the viewpoints of film formability and recycling properties.

The content of the polyester resin is preferably 70% by mass or more and 97% by mass or less, more preferably 75% by mass or more and 95% by mass or less with respect to 100% by mass of the sum of all components contained in the cavity-containing layer A. In a case where the content of the polyester resin is 70% by mass or more, deterioration of film formability of the cavity-containing polyester film can be suppressed. In a case where the content of the polyester resin is 97% by mass or less, cavities can be formed in the cavity-containing polyester film by addition of polypropylene resin and silicone resin.

Next, polypropylene resin, which is an immiscible resin used as a cavity generating agent in the present invention, will be described. The cavity-containing polyester film of the present invention can maintain the cavity generating properties by adopting a specific layer configuration and using polypropylene resin. Thus, the cavity-containing polyester film of the present invention has sufficient lightness and cushioning properties as well as is excellent in film formability, concealing properties, and whiteness.

The polypropylene resin used in the present invention is preferably crystalline polypropylene having a propylene unit at preferably 95 mol% or more, more preferably 98 mol% or more. The polypropylene resin is particularly preferably crystalline polypropylene homopolymer having a propylene unit at 100 mol%.

The melt flow rate (MFR) of the polypropylene resin used in the present invention is preferably 1.0 g/10 min or more and 10.0 g/10 min or less, more preferably 1.5 g/10 min or more and 7.0 g/min or less from the viewpoints of cavity generating properties and film formability. In a case where the MFR is 1.0 g/10 min or more and 10.0 g/10 min or less, cavities are likely to be formed since the dispersed polypropylene particles are less likely to be deformed when extruded from a die. Furthermore, in a case where the MFR is 1.0 g/10 min or more and 10.0 g/10 min or less, the dispersibility of dispersed polypropylene particles is also excellent, sufficient concealing properties are obtained, and film formability is also excellent. The melt flow rate (MFR) is a value measured in conformity with JIS K 7210 under conditions of 230°C and a load of 2.16 kg.

The deflection temperature under load of the polypropylene resin used in the present invention is preferably 85°C or more, more preferably 90°C or more, still more preferably 95°C or more from the viewpoint of cavity generating properties. The upper limit of the deflection temperature under load does not need to be particularly limited, but is preferably 135°C or less. In a case where the deflection temperature under load is 85°C or more, cavities are likely to be formed since the dispersed polypropylene particles are less likely to be crushed particularly in the longitudinal stretching step in which the film is heated at a temperature equal to or higher than the glass transition temperature of the polyester resin described later to be stretched. The deflection temperature under load is a value measured in conformity with JIS K 7191-1, 2, Method B when the bending stress of the test piece is 0.45 MPa.

The weight average molecular weight (Mw) of the polypropylene resin used in the present invention is preferably 200,000 or more and 450,000 or less, more preferably 250,000 or more and 400,000 or less from the viewpoints of cavity generating properties and of suppressing thermal degradation during the extrusion and recovery steps. In a case where the Mw is 450,000 or less, the dispersibility of dispersed polypropylene particles is favorable, sufficient concealing properties are obtained, and film formability is also excellent. In a case where the Mw is 200,000 or more, the dispersed polypropylene particles are less likely to be deformed and therefore cavities are likely to be formed. It is preferable that the Mw is 200,000 or more since the decrease in cavity generating properties can be suppressed even when a recycled raw material is used.

The molecular weight distribution (Mw/Mn), which is the ratio of the weight average molecular weight (Mw) to the number average molecular weight (Mn), is preferably 2 or more and 6 or less, more preferably 2 or more and 5 or less. The Mw/Mn is an index indicating the spread of the molecular weight distribution, and it means that the molecular weight distribution is broader as this value is larger. It is preferable that the Mw/Mn is 6 or less since the amount of low molecular weight components decreases, and the decreases in whiteness and cavity generating properties can be suppressed even when a recycled raw material is used. A Mw/Mn ratio of 2 or more is suitable for industrial production from the viewpoint of cost. The weight average molecular weight (Mw) and number average molecular weight (Mn) are values measured by gel permeation chromatography (GPC).

The content of the polypropylene resin is preferably 3% by mass or more and 30% by mass or less, more preferably 5% by mass or more and 25% by mass or less with respect to 100% by mass of the sum of all components contained in the cavity-containing layer A from the viewpoints of cavity generating properties and film formability. In a case where the content of the polypropylene resin is 3% by mass or more and 30% by mass or less, it is possible to form cavities for obtaining sufficient lightness and cushioning properties as well as the film formability is excellent.

Examples of the silicone resin used in the present invention include silicone polymers, for example, a partially crosslinked silicone polymer (that is, silicone resin, which is silicone resin in the narrow sense) and a linear silicone polymer (that is, silicone rubber). Specific examples thereof include methyl silicone resin, methyl phenyl silicone resin, phenyl silicone resin, alkyd-modified silicone resin, polyester-modified silicone resin, urethane-modified silicone resin, epoxy-modified silicone resin, and acryl-modified silicone resin. Silicone resin having a crosslinked structure is preferable from the viewpoint of withstanding the extrusion temperature of the polyester resin, which is the base resin, and the viewpoint of suppressing contamination during steps due to sublimation.

The method for adding the silicone resin is not particularly limited, but may be direct addition in which powder or pellet-like silicone resin is dry-blended with the base resin and added. A master batch may be prepared in advance by melt-mixing the polyester resin, the polypropylene resin, and the silicone resin. Silicone resin-containing polyester pellets obtained by material recycling of the silicone resin contained in the release layer of a release polyester film together with the polyester film may be added.

The amount of the silicone resin added is preferably 1 ppm or more and 10,000 ppm or less, more preferably 100 ppm or more and 8,000 ppm or less with respect to the total mass of the cavity-containing layer A from the viewpoints of cavity generating properties, film formability, and manufacturing cost. The apparent density can be effectively decreased by setting the amount to 1 ppm or more. By setting the amount to 10,000 ppm or less, contamination during steps and deterioration of film formability can be suppressed. Furthermore, the manufacturing cost can be reduced.

The content of polydimethylsiloxane derived from the silicone resin can be determined by NMR (nuclear magnetic resonance) method. The content of polydimethylsiloxane derived from the silicone resin is preferably 1 ppm or more and 2500 ppm or less, more preferably 100 ppm or more and 2400 ppm or less with respect to the total mass of the cavity-containing layer A from the viewpoints of cavity generating properties, film formability, and manufacturing cost. The content is still more preferably 100 ppm or more and 1400 ppm or less. The apparent density can be effectively decreased by setting the content to 1 ppm or more. By setting the content to 2500 ppm or less, contamination during steps and deterioration of film formability can be suppressed. Furthermore, the manufacturing cost can be reduced. Since silicone resin has a crosslinked structure and is insoluble in solvents, the content of polydimethylsiloxane present in the silicone resin determined by the NMR measurement method described later can be taken as an index of the content of silicone resin in the cavity-containing layer A.

The content of polydimethylsiloxane in the silicone resin contained in the cavity-containing layer A determined by the NMR method is preferably 0.005% by mass or more and 2.000% by mass or less with respect to 100% by mass of the polypropylene resin in the cavity-containing layer A. The content is more preferably 0.010% by mass or more and 1.800% by mass or less. The content is still more preferably 0.100% by mass or more and 0.800% by mass or less. By setting the content to 0.005% by mass or more with respect to 100% by mass of the polypropylene resin, the heat resistance or rigidity of polypropylene resin is improved, and cavities can be efficiently generated without being crushed during stretching. By setting the content to 2.000% by mass or less, deterioration of film formability can be suppressed.

As the cavity-containing layer A contains a small amount of silicone resin, heat resistance or rigidity can be imparted to the polypropylene resin. Hence, there is an effect that the thermal degradation of the polypropylene resin can be suppressed during material recycling and the cavity generating properties can be maintained. Also as a cavity-containing polyester film, since the cavities are less likely to be crushed in high-temperature environments, it is possible to suppress unevenness in thickness due to localized crushing of the polypropylene resin, which is a void generating agent.

As long as the objects of the present invention are not impaired, an immiscible resin other than the polypropylene resin may be contained. Examples of the immiscible resin include polyethylene resin, polymethylpentene resin, and a cyclic polyolefin resin. Examples of the immiscible resin also include polycarbonate resin, polysulfone resin, and cellulose resin. The polypropylene resin is contained at preferably 90% by mass or more, more preferably 95% by mass or more, most preferably 100% by mass with respect to 100% by mass of the sum of immiscible resins in the cavity-containing layer A. From the viewpoints of whiteness and cavity generating properties, it is preferable not to contain dispersants such as polyethylene glycol and a surfactant.

These polyester resins or polypropylene resin may contain a small amount of other polymers and antioxidants, heat stabilizers, matting agents, pigments, ultraviolet absorbers, fluorescent whitening agents, plasticizers, other additives or the like as long as the objects of the present invention are not impaired. In particular, it is preferable to contain an antioxidant or a heat stabilizer in order to suppress oxidative degradation of polypropylene resin. The kinds of antioxidant and heat stabilizer are not particularly limited, but include, for example, hindered phenol-based, phosphorus-based, hindered amine-based ones, and these may be used singly or in combination. The amount added is preferably 1 ppm or more and 50,000 ppm or less with respect to the total mass of the cavity-containing layer A. In the present invention, excellent whiteness can be secured also when a fluorescent whitening agent is not added to the cavity-containing layer A.

In the present invention, in order to improve the concealing properties and whiteness, it is possible to contain an inorganic pigment in the polyester resin or polypropylene resin of the cavity-containing polyester film, if necessary. Examples of the inorganic pigment include silica, kaolinite, talc, calcium carbonate, zeolite, alumina, barium sulfate, titanium oxide, and zinc sulfide. Among these, titanium oxide, calcium carbonate, and barium sulfate are preferable from the viewpoint of concealing properties and whiteness. These inorganic pigments may be used singly or in combination of two or more kinds thereof. These inorganic pigments can be contained in the cavity-containing polyester film by being added to the polyester resin or polypropylene resin in advance.

The method for mixing the inorganic pigment into the polyester resin or polypropylene resin is not particularly limited, but the following method may be mentioned. In other words, examples of the method include a method in which a polyester resin and polypropylene resin are dry-blended and then put directly into the film-forming machine, and a method in which a polyester resin and polypropylene resin are dry-blended and then melt-kneaded using various general kneaders to form a master batch.

The cavity-containing polyester film of the present invention has a lamination structure in which the first coating layer B1 including a polyester resin containing an inorganic pigment, the cavity-containing layer A that contains cavities inside, and the second coating layer B2 including a polyester resin containing an inorganic pigment are laminated in this order. In other words, the first coating layer B1, the cavity-containing layer A, and the second coating layer B2 are arranged in this order in the thickness direction of the cavity-containing polyester film. Here, in a case where the cavity-containing layer A containing polypropylene resin is exposed to the surface, some of the dispersed polypropylene particles exposed cause contamination during steps such as roll contamination. As the cavity-containing layer A is coated with the first coating layer B1 and second coating layer B2 containing an inorganic pigment, there is an effect of preventing a decrease in whiteness.

Some layer(s) may be present between the first coating layer B1 and the cavity-containing layer A, but it is preferable that no layer is present between the two layers. In other words, it is preferable that the first coating layer B1 is laminated on the cavity-containing layer A with no layer interposed therebetween. In other words, it is preferable that the first coating layer B1 is in contact with the cavity-containing layer A. Meanwhile, some layer(s) may be present between the cavity-containing layer A and the second coating layer B2, but it is preferable that no layer is present between the two layers. In other words, it is preferable that the second coating layer B2 is laminated on the cavity-containing layer A with no layer interposed therebetween. In other words, it is preferable that the second coating layer B2 is in contact with the cavity-containing layer A.

The ratio of the sum of the thickness of the first coating layer B1 and the thickness of the second coating layer B2 to the sum of the thickness of the first coating layer B1, the thickness of the cavity-containing layer A, and the thickness of the second coating layer B2 (hereinafter sometimes also referred to as layer ratio) is preferably 6% or more and 40% or less, more preferably 8% or more and 30% or less from the viewpoint of cavity generating properties and suppression of the exposure of polypropylene resin and silicone resin. In a case where the layer ratio is 6% or more and 40% or less, the exposure of polypropylene resin and silicone resin can be suppressed, and the contact angle of water and the contact angle of diiodomethane can be decreased. In a case where the layer ratio is 6% or more and 40% or less, it is easy to form cavities for obtaining sufficient lightness and cushioning properties.

Examples of the inorganic pigment contained in the first coating layer B1 and second coating layer B2 include silica, kaolinite, talc, calcium carbonate, zeolite, alumina, barium sulfate, titanium oxide, and zinc sulfide. Among these, titanium oxide, calcium carbonate, and barium sulfate are preferable and titanium oxide is particularly preferable from the viewpoint of concealing properties and whiteness. These inorganic pigments may be used singly or in combination of two or more kinds thereof. These pigments can be contained in the film by being added to the polyester resin in advance.

The amount of inorganic pigment added in the first coating layer B1 is not particularly limited, but is preferably 1% or more and 35% by mass or less, more preferably 2% or more and 30% by mass or less with respect to 100% by mass of all components constituting the first coating layer B1. In a case where the amount of inorganic pigment added is 1% by mass or more and 35% by mass or less, it is easy to improve the concealing properties and whiteness of the cavity-containing polyester film as well as it is possible to improve the film formability and mechanical strength of the cavity-containing polyester film.

The description of the amount of inorganic pigment added in the second coating layer B2 will be omitted since the description overlaps with the description of the amount of inorganic pigment added in the first coating layer B1. Hence, the description of the amount of inorganic pigment added in the first coating layer B1 can also be regarded as the description of the amount of inorganic pigment added in the second coating layer B2. The amount of inorganic pigment added in the second coating layer B2 and the amount of inorganic pigment added in the first coating layer B1 can be independent of each other. Therefore, the amount of inorganic pigment added in the second coating layer B2 and the amount of inorganic pigment added in the first coating layer B1 may be the same as or different from each other. The amount of inorganic pigment added in the second coating layer B2 is preferably the same as the amount of inorganic pigment added in the first coating layer B1.

A coating layer may be provided on at least one surface of the cavity-containing polyester film of the present invention in order to improve the covering properties and adhesive properties of printing inks, coating agents and the like. A polyester resin is preferable as a compound constituting the coating layer. In addition to this, it is possible to apply compounds disclosed as a means for improving the adhesive properties of ordinary polyester films, such as a polyurethane resin, a polyester urethane resin, and an acrylic resin.

As a method for providing the coating layer, it is possible to apply a commonly used method such as gravure coating, kiss coating, dip coating, spray coating, curtain coating, air knife coating, blade coating, or reverse roll coating. As the coating stage, it is possible to apply any of a method in which coating is performed before stretching of the film, a method in which coating is performed after longitudinal stretching, or a method in which coating is performed on the surface of the film subjected to the stretching treatment.

The production method for the cavity-containing polyester film of the present invention will be described. For example, mixed pellets formed of a composition containing a polyester resin, polypropylene resin, and a silicone resin are dried, then melt-extruded into a sheet from a T-shaped die, brought into close contact with a casting drum by an electrostatic application method or the like, cooled and solidified to obtain an unstretched film.

Next, the unstretched film is stretched and oriented, but the most generally used sequential biaxial stretching method, particularly a method in which an unstretched film is longitudinally stretched in the machine direction and then transversely stretched in the transverse direction, will be described below as an example. First, in the longitudinal stretching step in the machine direction, the film is heated and stretched between two or multiple rolls having different circumferential speeds by 2.5 to 5.0 times. The heating means used at this time may be a method using a heating roll or a method using a non-contact heating medium, or these may be used in combination. At this time, it is preferable to set the temperature of the film to be in a range of (Tg - 10°C) to (Tg + 50°C). Next, the uniaxially stretched film is introduced into a tenter and stretched by 2.5 to 5 times in the transverse direction at a temperature of (Tg - 10°C) to (Tm - 10°C) or less to obtain a biaxially stretched film.

Here, Tg is the glass transition temperature of polyester resin, and Tm is the melting point of polyester resin. The film thus obtained is preferably subjected to heat treatment if necessary, and the treatment temperature is preferably in a range of (Tm - 60°C) to Tm.

In the cavity-containing polyester film of the present invention, a recycled raw material formed of a used cavity-containing polyester film of the present invention can also be contained in the cavity-containing layer A. The used cavity-containing polyester film of the present invention is scraps generated in the film forming step, waste film generated by breaking troubles and the like, and film collected from the market. Also in a case where a recycled raw material is added to the cavity-containing layer A, if the recycled raw material of the cavity-containing polyester film of the present invention is used, cavity generating properties can be maintained since a small amount of silicone resin is added to the polypropylene resin. Thus sufficient lightness and cushioning properties are imparted to the cavity-containing polyester film, and a cavity-containing polyester film excellent in concealing properties and whiteness can be obtained. In particular, in today's world where it is required to consider environmental impacts, since material recycling of used cavity-containing polyester films is desirable, and the amount of recycled raw material added may increase more than before. However, if a silicone resin is added, the cavity generating properties can be maintained also in a case where the amount of recycled raw material added is increased.

The amount of recycled raw material added is preferably 5% to 70% by mass with respect to 100% by mass of the total mass of the cavity-containing layer A from the viewpoints of reducing raw material costs, whiteness, and film formability.

The first coating layer B1 or the second coating layer B2 may contain a recycled raw material, but preferably does not contain a recycled raw material from the viewpoint of avoiding deterioration of whiteness and exposure of polypropylene resin in the recycled raw material.

The apparent density of the cavity-containing polyester film in the present invention is preferably 0.80 g/cm$^3$ or more and 1.20 g/cm$^3$ or less, more preferably 0.80 g/cm$^3$ or more and 1.10 g/cm$^3$ or less. In a case where the apparent density is 0.80 g/cm$^3$ or more and 1.20 g/cm$^3$ or less, the total amount of cavities in the cavity-containing polyester film becomes appropriate, and it is easy to handle the film during post-processing such as printing and during use. In a case where the apparent density is 0.80 g/cm$^3$ or more and 1.20 g/cm$^3$ or less, sufficient lightness and cushioning properties are obtained.

In particular, the cavity-containing polyester film of the present invention is excellent in lightness, film formability, concealing properties, and whiteness even when the apparent density is 0.80 to 1.10 in a case where a silicone resin is contained in a small amount.

The apparent density is a value obtained by the measurement method described in the evaluation methods described later.

The cavity-containing polyester film in the present invention has a total light transmittance of preferably 30% or less, more preferably 25% or less. In a case where the total light transmittance is 30% or less, sufficient concealing properties are obtained. For example, in a case where the film is used for a label and the like, the image printed on the label is clear. The total light transmittance is a value in terms of 50 μm thickness obtained by the measurement method described in the evaluation methods described later.

The cavity-containing polyester film in the present invention preferably has a color tone b value of 4.0 or less, still more preferably 3.0 or less. In a case where the color tone b value is greater than 4.0, the whiteness is inferior, and the clearness at the time of printing may be inferior and the commercial value may be impaired when the film is formed into a label and the like.

The thickness of the cavity-containing polyester film of the present invention is arbitrary, but is preferably 20 μm or more and 300 μm or less.

The water contact angle on the cavity-containing polyester film of the present invention after heating at 150°C for 30 minutes is preferably 50° to 90°. The water contact angle is more preferably 55° to 85°. In a case where this water contact angle is 90° or less, the cavity-containing polyester film can suppress coating defects and printing defects during processing. However, as long as a polyester resin is used, the possibility that this water contact angle is 50° or less is low. The diiodomethane contact angle on the cavity-containing polyester film of the present invention after heating at 150°C for 30 minutes is preferably 10° to 40°. In a case where the diiodomethane contact angle is 40° or less, the cavity-containing polyester film can suppress coating defects and printing defects during processing. In a case where the diiodomethane contact angle is 10° or more, the cavity-containing polyester film can improve the close contact properties between the coating and the raw material during processing.

The water contact angle on the cavity-containing polyester film of the present invention after 72 hours at 85°C and 85% RH is preferably 50° to 90°. The water contact angle is more preferably 55° to 85°. In a case where this water contact angle is 90° or less, the cavity-containing polyester film can suppress coating defects and printing defects when processed after long-term warehouse storage. However, as long as a polyester resin is used, the possibility that this water contact angle is 50° or less is low. The diiodomethane contact angle on the cavity-containing polyester film of the present invention after 72 hours at 85°C and 85% RH is preferably 10° to 40°. In a case where the diiodomethane contact angle is 40° or less, the cavity-containing polyester film can suppress coating defects and printing defects when processed after long-term warehouse storage. In a case where the diiodomethane contact angle is 10° or more, the cavity-containing polyester film can improve the close contact properties between the coating and the raw material during processing.

As described above, the cavity-containing polyester film according to the present invention has excellent lightness, film formability, concealing properties, whiteness, and the like.

Specifically, since the cavity-containing layer A contains a silicone resin as well as a polyolefin resin, cavities can be efficiently generated during the fabrication process of the cavity-containing polyester film (for example, in the stretching step) compared to a case where a silicone resin is not contained. This is considered to be because the heat resistance or rigidity of the polyolefin resin dispersed in the cavity-containing layer A, that is, the dispersed polyolefin particles is improved by the silicone resin and thus excessive deformation of the dispersed polyolefin particles during the fabrication process of the cavity-containing polyester film (for example, excessive deformation of the dispersed polyolefin particles in the stretching step) can be suppressed. As a result (that is, since cavities can be efficiently generated), it is possible to improve concealing properties and also to improve lightness (that is, to save the weight).

Moreover, since the first coating layer B1 containing an inorganic pigment, the cavity-containing layer A, and the second coating layer B2 containing an inorganic pigment are laminated in this order, it is possible to further improve concealing properties and to improve whiteness. In addition to this, since it is possible to avoid that the silicone resin in the cavity-containing layer A is exposed on the surface of the cavity-containing polyester film, it is possible to prevent the water contact angle and diiodomethane contact angle from becoming excessively large by the silicone resin, and therefore, deterioration of coatability and printability that may be caused by the silicone resin in the cavity-containing layer A can be suppressed (for example, coating defects and printing defects can be suppressed in a case where coating or printing is performed on the cavity-containing polyester film).

In addition, the cavity-containing polyester film is excellent in lightness since the apparent density is 0.80 g/cm³ or more.

Furthermore, since the apparent density is 1.20 g/cm³ or less, the volume of cavities is not excessively large, and therefore, the cavity-containing polyester film is excellent in film formability.

Therefore, the cavity-containing polyester film according to the present invention is suitably used as a substrate for labels, cards, packaging materials, polarizing plates, release films used in the manufacture of laminated ceramic capacitors, and the like.

A resin composition can be produced by material recycling of the cavity-containing polyester film. Examples of the material recycling method include a method in which the cavity-containing polyester film is baled if necessary, pulverized, fed into an extruder, extruded from a die, and formed into an arbitrary shape (for example, the strands extruded from the die are cut by a pelletizer) if necessary. The resin composition may be in the form of, for example, strands, pellets, or flakes.

The resin composition contains an inorganic pigment, a polyester resin, a polyolefin resin, and a silicone resin. Specifically, the resin composition contains an inorganic pigment derived from the cavity-containing polyester film, a polyester resin derived from the cavity-containing polyester film, a polyolefin resin derived from the cavity-containing polyester film, and a silicone resin derived from the cavity-containing polyester film. The use of the resin composition is not particularly limited, but the resin composition can be suitably used as one of the raw materials for the cavity-containing layer A of a cavity-containing polyester film.

EXAMPLES

Hereinafter, the present invention will be specifically described with reference to Examples. The present invention is not limited to Examples described below. The respective evaluation items in Examples and Comparative Examples were measured by the following methods.

(1) Film formability

The film formability was evaluated as follows based on the number of breaking when the film was fabricated in 2 hours of fabrication time under the film forming conditions described in the fabrication of cavity-containing polyester film described later.

    Favorable: No breaking
    Acceptable: 1 to 3 times of breaking
    Poor: 4 or more times of breaking, film formation is impossible

(2) Apparent density

The cavity-containing polyester film was cut into four sheets of 5.0 cm square, the four sheets were stacked, the total thickness was measured to four effective digits at ten different locations using a micrometer, and the average value of the thicknesses of the four stacked sheets was determined. This average value was divided by 4 and rounded to three effective digits to obtain the average thickness per sheet (t: μm) . The mass (w: g) of four sheets of the same sample was measured using an automatic top-pan balance to four effective digits, and the apparent density was determined by the following equation. The apparent density was rounded to three effective digits.

$$\text{Apparent density (g/cm}^3) = w/(5.0 \times 5.0 \times t \times 10^{-4} \times 4)$$

(3) Total light transmittance

The total light transmittance was measured using a haze meter (NDH5000, manufactured by NIPPON DENSHOKU INDUSTRIES Co., Ltd.) and converted into a value per 50 μm film thickness. The same measurement was performed 3 times and the arithmetic mean value thereof was adopted.

(4) Color tone b value

The color tone b value was measured in conformity with JIS-8722 using a color-difference meter (ZE6000, manufactured by NIPPON DENSHOKU INDUSTRIES Co., Ltd.). It is judged that the whiteness is higher and the yellowness is weaker as the color tone b value is smaller.

(5) Water contact angle after heating for 30 min at 150°C

After the sample was heated in a Geer oven at 150°C for 30 minutes, the contact angle for distilled water on the sample was measured 1 minute after dropping using a FACE contact angle meter (Model CA-X, manufactured by Kyowa Interface Science Co., Ltd.). The measurement was performed five times for each sample, and the average of three measured values excluding the maximum and minimum measured values was taken as the contact angle.

(6) Diiodomethane contact angle after heating for 30 min at 150°C

After the sample was heated in a Geer oven at 150°C for 30 minutes, the contact angle for diiodomethane on the sample was measured 1 minute after dropping using a FACE contact angle meter (Model CA-X, manufactured by Kyowa Interface Science Co., Ltd.). The measurement was performed five times for each sample, and the average of three measured values excluding the maximum and minimum measured values was taken as the contact angle.

(7) Water contact angle after 72 h at 85°C and 85% RH

After the sample was left in a thermo-hygrostat in an environment of 85°C and 85% RH for 72 hours, the contact angle for distilled water on the sample was measured 1 minute after dropping using a FACE contact angle meter (Model CA-X, manufactured by Kyowa Interface Science Co., Ltd.). The measurement was performed five times for each sample, and the average of three measured values excluding the maximum and minimum measured values was taken as the contact angle.

(8) Diiodomethane contact angle after 72 h at 85°C and 85% RH

After the sample was left in a thermo-hygrostat in an environment of 85°C and 85% RH for 72 hours, the contact angle for diiodomethane on the sample was measured 1 minute after dropping using a FACE contact angle meter (Model CA-X, manufactured by Kyowa Interface Science Co., Ltd.). The measurement was performed five times for each sample, and the average of three measured values excluding the maximum and minimum measured values was taken as the contact angle.

(9) Measurement of polydimethylsiloxane content

The sample was dissolved in 0.1 ml of CDCl3 (deuterated chloroform)/HFIP-d (deuterated hexafluoroisopropanol) (1/1 volume ratio), then 0.5 ml of TCE (tetrachloroethane)-d was added, and dissolution was performed at 130°C. The solution was subjected to H-NMR measurement at 120°C, and the mass ratio of polydimethylsiloxane was calculated from the ratio of the acquired integral values of components. As the peak of polydimethylsiloxane, a peak detected near 0.2 ppm in the NMR spectrum was used. The content of polydimethylsiloxane in the cavity-containing layer A was calculated

**EP 4 509 315 A1**

using the layer ratio. Since silicone resin is cross-linked and contains a large amount of insoluble components, it is difficult to determine the amount of silicone resin added, but the above-described method makes it possible to determine the quantity of soluble polydimethylsiloxane in silicone resin. It has been revealed that there is a correlation between the amount of silicone resin added and the polydimethylsiloxane content.

(10) Measurement of mass ratio of polypropylene resin content to polydimethylsiloxane content

H-NMR measurement was carried out in the same manner as above, and the mass ratio was calculated from the ratio of the integral values of the peaks attributed to polypropylene resin and polydimethylsiloxane in the acquired NMR spectrum.

(Example 1)

[Production of titanium oxide-containing master pellet (M1)]

With 50% by mass of polyethylene terephthalate resin having an intrinsic viscosity of 0.62, 50% by mass of anatase type titanium dioxide having an average particle size of 0.3 $\mu$m (by electron microscopy) was mixed. The mixture was then fed into a vented twin-screw extruder and kneaded to produce titanium oxide-containing master pellets (M1).

[Production of silicone resin S]

Heat-curing silicone resin (KS-774, manufactured by Shin-Etsu Chemical Co., Ltd.) was diluted with a solvent, 3 parts by mass of a catalyst (CAT-PL-3, manufactured by Shin-Etsu Chemical Co., Ltd.) was added to 100 parts by mass of the silicone resin, and the mixture was heated at 150°C for 60 seconds. After heating, the cured silicone resin was powdered to obtain silicone resin S.

[Fabrication of unstretched film]

Mixed were 93% by mass of polyethylene terephthalate resin having an intrinsic viscosity of 0.62, 6.92% by mass of polypropylene resin having MFR = 2.5, Mw = 320,000, Mw/Mn = 4.0, and deflection temperature under load = 92°C, and 800 ppm of silicone resin S. The mixture was then dried in a vacuum to obtain a raw material for the cavity-containing layer A. Meanwhile, 30% by mass of the titanium oxide-containing master pellets (M1) and 70% by mass of polyethylene terephthalate resin having an intrinsic viscosity of 0.62 were pellet-mixed. The mixture was then dried in a vacuum to obtain a raw material for the first coating layer B1 and second coating layer B2. These raw materials were fed into separate extruders, melted at 285°C, and laminated so that the cavity-containing layer A, the first coating layer B1, and the second coating layer B2 were in the order B1/A/B2. The laminated body was joined using a feedblock so that the thickness ratio was 10/80/10. The joined body was extruded from a T-die onto a cooling drum adjusted to 30°C to fabricate an unstretched film having a two-kind three-layer configuration.

[Fabrication of cavity-containing polyester film]

A cavity-containing polyester film was fabricated under the following film forming conditions. In other words, the obtained unstretched film was uniformly heated to 70°C using heating rolls, and longitudinally stretched between two pairs of nip rolls having different circumferential speeds by 3.4 times. At this time, as an auxiliary heating device for the unstretched film, an infrared heater (rated power: 20 W/cm) equipped with a gold reflective film in the middle of nip rolls was disposed on the two opposing surfaces of the film (at a distance of 1 cm from the film surface) to heat the film. The uniaxially stretched film thus obtained was guided to a tenter, heated to 140°C, and transversely stretched by 4.0 times, the width of the film was fixed, heat treatment was performed at 235°C, and the film was then relaxed at 210°C by 3% in the transverse direction to obtain a cavity-containing polyester film having a thickness of 50 $\mu$m. The results of apparent density, water contact angle, diiodomethane contact angle, color tone b value, total light transmittance, and film formability are presented in Table 1.

(Examples 2, 3, and 5)

Cavity-containing polyester films were obtained in the same manner as in Example 1 except that the raw material ratio for the cavity-containing layer A was changed as presented in Table 1 in Example 1.

(Example 4)

A cavity-containing polyester film was obtained in the same manner as in Example 1 except that the raw material ratio for the cavity-containing layer A and the layer ratio were changed as presented in Table 1 in Example 1.

(Example 6)

[Production of silicone resin-containing polyester pellet]

A cavity-containing polyester film was fabricated in the same manner as in Example 1 except that the silicone resin S for the cavity-containing layer A was not added, and then a release layer mainly composed of silicone resin was applied to one surface of the cavity-containing polyester film at 0.075 $g/m^2$ to obtain a release polyester film. The release polyester film was subjected to material recycling together with the release layer to obtain silicone resin-containing polyester pellets.

[Fabrication of cavity-containing polyester recycled film]

A cavity-containing polyester film was obtained in the same manner as in Example 1 except that 61.3% by mass of polyethylene terephthalate resin (intrinsic viscosity 0.62), 13.7% by mass of polypropylene resin (MFR = 2.5, Mw = 320000, Mw/Mn = 4.0, deflection temperature under load = 92°C), and 25% by mass of silicone resin-containing polyester pellets were mixed.

The composition in Example 6 is presented in Table 1 in the same outline as in Example 1. The amount of polyethylene terephthalate resin in Example 6 in Table 1 is the total amount of polyethylene terephthalate resin having an intrinsic viscosity of 0.62 and polyethylene terephthalate resin derived from the silicone resin-containing polyester pellets. The amount of polypropylene resin in Example 6 in Table 1 is the total amount of polypropylene resin having MFR=2.5, Mw=320,000, Mw/Mn=4.0, and deflection temperature under load=92°C and polypropylene resin derived from the silicone resin-containing polyester pellets. The amount of silicone resin in Example 6 in Table 1 is the amount of silicone resin derived from the silicone resin-containing polyester pellets.

(Comparative Example 1)

A cavity-containing polyester film was obtained in the same manner as in Example 1 except that the amount of silicone resin in the cavity-containing layer A was changed to 0 ppm and the content of polyethylene terephthalate resin was changed to 93.08% by mass in Example 1. Since the cavity-containing polyester film of Comparative Example 1 has an apparent density of more than 1.20 $g/cm^3$, Comparative Example 1 is outside the scope of the present invention. For this reason, the lightness and cushioning properties were poor. Since the mass is large, the manufacturing cost also increases. The cavity-containing polyester film of Comparative Example 1 had a high total light transmittance and was poor in concealing properties compared to those in Examples 1 to 6.

(Comparative Example 2)

A cavity-containing polyester film was obtained in the same manner as in Example 1 except that the layer ratio described above was set to 0% in Example 1. Comparative Example 2 does not include the first coating layer B1 and the second coating layer B2, and is therefore outside the scope of the present invention. In Comparative Example 2, the cavities in the cavity-containing layer A are exposed to the surface, and the surface of Comparative Example 2 becomes extremely rough. In Comparative Example 2, the total light transmittance was high, and the concealing properties were poor compared to those in Examples 1 to 6. In Comparative Example 2, the color tone b value was large, and the whiteness was low and the yellowness was strong compared to those in Examples 1 to 6. On the cavity-containing polyester film of Comparative Example 2, the contact angle increases by the influence of silicone resin. In detail, the water contact angle exceeds 90°, and coating defects and printing defects during processing of the fabricated cavity-containing polyester film cannot be suppressed in Comparative Example 2. The diiodomethane contact angle also exceeds 40°, and coating defects and printing defects during processing of the fabricated cavity-containing polyester film cannot be suppressed in Comparative Example 2.

(Comparative Example 3)

A cavity-containing polyester film was obtained in the same manner as in Example 1 except that the raw material ratio for the cavity-containing layer A was changed as presented in Table 1 in Example 1. Comparative Example 3 has an apparent density of less than 0.80 g/cm$^3$ and is therefore outside the scope of the present invention. For this reason, the film formability in Comparative Example 3 was poor compared to the film formability in Examples 1 to 6.

As described above, the cavity-containing polyester film according to the present invention can, for example, suppress the thermal degradation of polypropylene resin during processing and can maintain the cavity generating properties as the cavity-containing layer A contains a silicone resin. For this reason, the cavity-containing polyester film according to the present invention has excellent lightness, film formability, concealing properties, and whiteness even when the apparent density is 0.80 to 1.20. In particular, the cavity-containing polyester films according Examples 12 to 6 have excellent lightness, film formability, concealing properties, and whiteness even when the apparent density is 0.80 to 1.10.

[Table 1]

| | | | Unit | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|---|
| Layer A | Raw material 1 | Polyethylene terephthalate resin | wt% | 93.00 | 87.75 | 82.50 | 82.50 | 81.70 | 82.67 | 93.08 | 82.60 | 86.00 |
| | Raw material 2 | Polypropylene resin | wt% | 6.92 | 12.11 | 17.30 | 17.30 | 17.30 | 17.30 | 6.92 | 17.30 | 12.00 |
| | Raw material 3 | Silicone resin | ppm | 800 | 1400 | 2000 | 2000 | 10000 | 350 | 0 | 1000 | 20000 |
| | Amount of polydimethylsiloxane in layer A | | ppm | 118 | 196 | 270 | 270 | 1300 | 59 | 0 | 270 | 2700 |
| | Mass ratio of polydimethylsiloxane/ polypropylene resin in layer A | | wt% | 0.17 | 0.16 | 0.16 | 0.16 | 0.75 | 0.03 | 0.00 | 0.16 | 2.25 |
| Film | Layer ratio | First coating layer B1 | % | 10 | 10 | 10 | 5 | 10 | 10 | 10 1 | 0 | 10 |
| | | Cavity-containing layer A | % | 80 | 80 | 80 | 90 | 80 | 80 | 80 | 100 | 80 |
| | | Second coating layer B2 | % | 10 | 10 | 10 | 5 | 10 | 10 | 10 | 0 | 10 |
| Apparent density | | | g/cm$^3$ | 1.18 | 1.03 | 0.97 | 0.93 | 0.82 | 0.98 | 1.22 | 0.95 | 0.75 |
| Water contact angle after 30 min at 150°C | | | ° | 68.7 | 70.2 | 71.3 | 73.2 | 73.2 | 71.0 | 74.9 | 98.0 | 75.3 |
| Water contact angle after 72 h at 85°C and 85% RH | | | ° | 76.4 | 75.3 | 73.4 | 75.1 | 75.1 | 74.9 | 75.3 | 91.0 | 76.0 |
| Diiodomethane contact angle after 30 min at 150°C | | | ° | 22.9 | 22.8 | 24.1 | 25.3 | 25.3 | 23.7 | 24.0 | 53.8 | 24.2 |
| Diiodomethane contact angle after 72 h at 85°C and 85% RH | | | ° | 26.1 | 28.2 | 24.4 | 25.8 | 25.8 | 26.3 | 25.9 | 46.7 | 24.5 |
| Whiteness | Color tone b value | | - | 1.2 | 1.2 | 1.2 | 1.2 | 1.1 | 1.2 | 1.2 | 1.5 | 1.1 |

EP 4 509 315 A1

(continued)

| | | Unit | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Concealing properties | Total light transmittance | % | 23 | 21 | 20 | 20 | 18 | 20 | 24 | 26 | 17 |
| Film formability | | - | Favorable | Favorable | Favorable | Favorable | Favorable | Favorable | Favorable | Favorable | Acceptable |

INDUSTRIAL APPLICABILITY

As described above, the cavity-containing polyester film of the present invention is excellent in lightness, film formability, concealing properties, and whiteness, and therefore, is suitably used, for example, as a substrate for labels, cards, packaging materials, polarizing plates, release films used in the manufacture of laminated ceramic capacitors, and the like.

**Claims**

1. A cavity-containing polyester film comprising:

   a first coating layer B1 that includes a polyester resin containing an inorganic pigment;
   a cavity-containing layer A that contains cavities inside; and
   a second coating layer B2 that includes a polyester resin containing an inorganic pigment,
   wherein the first coating layer B1, the cavity-containing layer A, and the second coating layer B2 are laminated in this order,
   the cavity-containing layer A includes a composition containing a polyester resin, a polyolefin resin, and a silicone resin, and
   the cavity-containing polyester film has an apparent density of 0.80 g/cm$^3$ or more and 1.20 g/cm$^3$ or less.

2. The cavity-containing polyester film according to claim 1, wherein a content of polydimethylsiloxane in the silicone resin in the cavity-containing layer A is 1 ppm or more and 2500 ppm or less with respect to a total mass of the cavity-containing layer A.

3. The cavity-containing polyester film according to claim 1, wherein a content of polydimethylsiloxane in the silicone resin in the cavity-containing layer A is 0.005% by mass or more and 2.000% by mass or less with respect to 100% by mass of the polyolefin resin.

4. The cavity-containing polyester film according to claim 1, wherein the inorganic pigment in the first coating layer B1 and second coating layer B2 is titanium oxide.

5. The cavity-containing polyester film according to claim 1, wherein a ratio of a sum of a thickness of the first coating layer B1 and a thickness of the second coating layer B2 to a sum of the thickness of the first coating layer B1, a thickness of the cavity-containing layer A, and the thickness of the second coating layer B2 is 6% or more and 40% or less.

6. The cavity-containing polyester film according to claim 1, which has a total light transmittance of 1% or more and 30% or less.

7. The cavity-containing polyester film according to claim 1, which has an apparent density of 0.80 g/cm$^3$ or more and 1.10 g/cm$^3$ or less.

8. The cavity-containing polyester film according to any one of claims 1 to 7, which is used for a label, a card, a packaging material, or a release film.

9. A resin composition comprising: an inorganic pigment; a polyester resin; a polyolefin resin; and a silicone resin, the resin composition being obtained by material recycling of the cavity-containing polyester film according to any one of claims 1 to 7.

10. A production method for a resin composition, comprising producing a resin composition containing an inorganic pigment, a polyester resin, a polyolefin resin, and a silicone resin by material recycling of the cavity-containing polyester film according to any one of claims 1 to 7.

## INTERNATIONAL SEARCH REPORT

| International application No. |
| --- |
| **PCT/JP2023/013922** |

### A. CLASSIFICATION OF SUBJECT MATTER

***B32B 27/36***(2006.01)i; ***B29C 67/20***(2006.01)i; ***B32B 5/18***(2006.01)i; ***B32B 27/00***(2006.01)i; ***B32B 27/32***(2006.01)i;
***C08J 9/00***(2006.01)i; ***C08K 3/013***(2018.01)i; ***C08K 5/54***(2006.01)i; ***G09F 3/02***(2006.01)i
FI: B32B27/36; B29C67/20 B; B32B5/18; B32B27/00 101; B32B27/32 C; C08J9/00 A; C08K3/013; C08K5/54; G09F3/02
B

According to International Patent Classification (IPC) or to both national classification and IPC

### B. FIELDS SEARCHED

Minimum documentation searched (classification system followed by classification symbols)

B32B21/00-43/00; B29C67/20; C08J9/00-9/42; C08K3/00-13/08; G09F3/00-3/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022/059580 A1 (TOYOBO CO., LTD.) 24 March 2022 (2022-03-24) claims 1-7, paragraphs [0002]-[0004], [0008], [0012], [0015], [0018], [0020]-[0023], [0025]-[0029], [0033]-[0035], [0037], [0043], [0051]-[0053], [0059]-[0062], [0065]-[0066] | 1, 4-10 |
| A | | 2-3 |
| Y | JP 2015-030232 A (TORAY INDUSTRIES) 16 February 2015 (2015-02-16) claims 1-3, paragraphs [0001], [0006]-[0007], [0016]-[0025], [0031]-[0033], [0042]-[0043], [0054]-[0056], [0060]-[0062] | 1, 4-5, 7, 9-10 |
| A | | 2-3, 6, 8 |
| X | JP 2017-177563 A (TOYOBO CO., LTD.) 05 October 2017 (2017-10-05) claim 1, paragraphs [0023]-[0027], [0030]-[0033], [0047]-[0056] | 9 |
| A | | 1-8, 10 |

☑ Further documents are listed in the continuation of Box C.      ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **15 June 2023** | **27 June 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2023/013922** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2001-026089 A (MITSUBISHI POLYESTER FILM COPP) 30 January 2001 (2001-01-30) paragraphs [0019]-[0027], [0084], [0093] | 1, 4-10 |
| A | | 2-3 |

Form PCT/ISA/210 (second sheet) (January 2015)

**INTERNATIONAL SEARCH REPORT**
Information on patent family members

International application No.

**PCT/JP2023/013922**

| Patent document cited in search report | | | Publication date (day/month/year) | Patent family member(s) | | | Publication date (day/month/year) |
|---|---|---|---|---|---|---|---|
| WO | 2022/059580 | A1 | 24 March 2022 | TW | 202224950 | A | |
| JP | 2015-030232 | A | 16 February 2015 | (Family: none) | | | |
| JP | 2017-177563 | A | 05 October 2017 | (Family: none) | | | |
| JP | 2001-026089 | A | 30 January 2001 | EP | 1052268 | A1 | |
| | | | | paragraphs [0029]-[0037], [0117]-[0119], table 1 | | | |
| | | | | KR | 10-2000-0077224 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49134755 A
- JP 2284929 A
- JP 2180933 A
- JP 54029550 B
- JP 11116716 A
- JP 7017779 B
- JP 8252857 A